# EUROPEAN PATENT APPLICATION

(11) **EP 4 559 431 A2**
(43) Date of publication of application: **28.05.2025**
(21) Application number: 24215177.7
(22) Date of filing: 25.11.2024
(51) Int. Cl.: A61C 5/64, A61C 5/68

(54) **DISPENSER ASSEMBLY WITH SYRINGE AND CAPSULE**

(30) Priority: 27.11.2023 US 202363602806 P
(71) Applicant: Dentsply Sirona Inc., York, PA 17401 (US)
(72) Inventor: MCDANIEL, Ricky D., Harrisburg, 28075 (US); MORGAN, John D., Stanfield, 28163 (US); WILKINSON, Kevin I., Owasso, 74055 (US)
(74) Representative: Venner Shipley LLP

(57) **Abstract**

A dispenser assembly including a syringe portion and a capsule portion interfacing with the syringe portion. The syringe portion includes a syringe containing a first material, the syringe includes a proximal open end and a distal open end defining a lumen, and a plunger disposed within the lumen at the proximal open end, the plunger configured to slidably move within the lumen and push the first material towards the distal open end. The capsule portion includes a capsule containing a second material, a capsule stopper disposed within the capsule, and an extruder configured to engage with the capsule and extrude the second material out of the capsule, wherein a rotation force of the extruder causes the capsule stopper to slidably move and pushes the second material towards the syringe portion for mixing the first material and second material together within the syringe.

## Description

### FIELD OF DISCLOSURE

The present disclosure relates to the field of endodontics, more particularly, a dispenser assembly for administering obturation materials for endodontics.

### BACKGROUND

Some endodontic obturation materials (e.g., zinc oxide eugenol (ZOE) sealer, reactive mineral trioxide aggregate (MTA) composition, etc.) require activation by mixing with a liquid prior to application into a root canal. Given that the time- consuming mixing step cannot be avoided, the handling of the material has always been the main problem of these types of materials. Moreover, given that observing optimum mixing conditions may be essential for the success of the endodontic treatment, errors or variations on the part of the practitioner and/or dispensing instrument or extruder may be detrimental to the quality of the obturation.

One conventional dispensing instrument for administering obturation materials is a dual chamber syringe. Each chamber contains a substance and mixes together by a mixer. However, this type of instrument works only for lyophilized substances (i.e., collagen) and requires additional processes to lyophilize the substance.

Another conventional instrument is two interlocked (luer lock) syringes. However, these types of instruments require separate steps to mix the solutions back and forth between the two syringes. This is a time consuming and inefficient (increases the number of steps for preparation) procedure for using this instrument.

Another dispensing instrument is a single-unit capsule extruder. While the capsule can produce the correct mixture and consistency, there are still challenges associated with these types of instruments. For instance, the extruder requires a high activation force to expel the composition. This may cause interrupted burst or uneven material expelling from the extruder. Also, visibility is restricted when operating the instrument due to the size of the instrument.

Therefore, a need exists to provide an improved dental obturation material dispenser, which has significantly improved handling and dispensing characteristics while at the same time produces a correct and consistent dental obturation material mixture.

### SUMMARY

In an example embodiment, a dispenser assembly including a syringe portion and a capsule portion interfacing with the syringe portion. The syringe portion includes a syringe containing a first material, the syringe includes a proximal open end and a distal open end defining a lumen, and a plunger disposed within the lumen at the proximal open end, the plunger configured to slidably move within the lumen and push the first material towards the distal open end. The capsule portion includes a capsule containing a second material, a capsule stopper disposed within the capsule, and an extruder configured to engage with the capsule and extrude the second material out of the capsule, wherein a rotation force of the extruder causes the capsule stopper to slidably move and pushes the second material towards the syringe portion for mixing the first material and second material together within the syringe.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is a perspective view of an exemplary dispenser assembly, according to an example embodiment of the present disclosure.
FIG. 2 is an exploded view of the exemplary dispenser assembly of FIG. 1, according to an example embodiment of the present disclosure.
FIG. 3 is a cross-sectional view of an exemplary syringe, according to an example embodiment of the present disclosure.
FIG. 4 is a partial cross-sectional view of an exemplary syringe and plunger, according to an example embodiment of the present disclosure.
FIG. 5A is a perspective view of an exemplary capsule, according to an example embodiment of the present disclosure.
FIG. 5B is a cross-sectional view of an exemplary capsule of FIG. 5A, according to an example embodiment of the present disclosure.
FIG. 6A is a cross-sectional view of an exemplary dispenser assembly, according to an example embodiment of the present disclosure.
FIG. 6B is a partial perspective view of an exemplary capsule extruder, according to an example embodiment of the present disclosure.
FIGS. 7A-7C illustrate an exemplary operation of the locking features, according to an example embodiment of the present disclosure.
FIGS. 8A-8C illustrate another exemplary operation of the locking features, according to another example embodiment of the present disclosure.
FIG. 9 is a partial cross-sectional view of an exemplary capsule and capsule extruder, according to an example embodiment of the present disclosure.
FIGS. 10A-10D illustrate an exemplary operation of dispenser assembly, according to an example embodiment of the present disclosure.
FIG. 11 is a perspective view of another exemplary dispenser assembly, according to another example embodiment of the present disclosure.
FIG. 12 is a perspective view of another exemplary dispenser assembly, according to another example embodiment of the present disclosure.

Wherever possible, the same reference numbers will be used throughout the drawings to represent the same parts.

### DETAILED DESCRIPTION OF EXAMPLE EMBODIMENTS

The present disclosure discloses a dispensing assembly including a syringe and a capsule containing a first material and a second material, respectively, configured to mix the first and second materials together to produce a correct and consistent composition, i.e., paste. The present device allows for a quick and efficient procedure for mixing the materials while administering the endodontic obturation material with low force. Additionally, the present device provides a quick-change instrument to rapidly and efficiently replace the capsule with another capsule.

As described herein, the term "user," as used herein, refers to a health care professional, which may include a person or entity that is associated with the health care system, more specifically, providing dental treatment and/or dental advice to a subject. Examples of health care professionals may include dentists, endodontists and other medical professionals. A health care professional may work in or be affiliated with dentistry, labs, and health care locations, or also in academic training, research and administration.

As described herein, in general expressions, the term "proximal" end relates to an end being closest to the user, and the term "distal" end relates to an end being farthest from the user. Alternatively, in relation to the dispensing assembly, the term "proximal" end relates to an end closest to the user that is operating the dispensing assembly, and the "distal" end relates to an end where a composition extrudes thereof.

As used herein, "dispenser" or "extruder" or any other dispensing mechanism can be an instrument commonly used in dentistry to administer endodontic obturation materials. For example, the dispenser or extruder and/or any other portion thereof may be capable of receiving a capsule or container containing a single type of material, or multiple types of materials. For example, the dispenser or extruder may contain a powder and the capsule or container is configured to contain a liquid.

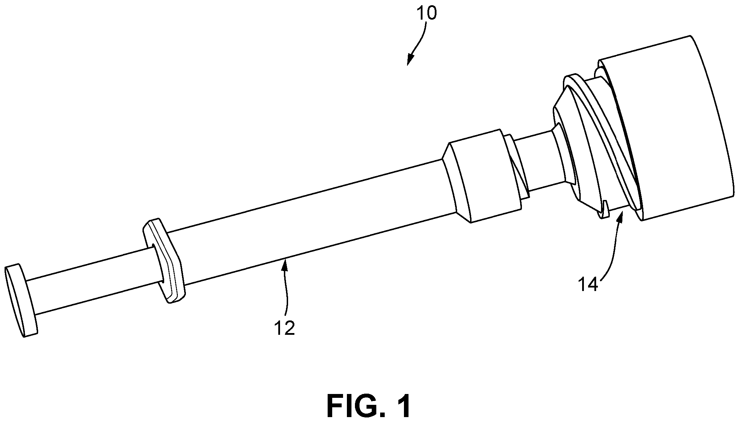

Referring to FIG. 1, a dispensing assembly 10 for dispensing a composition, such as an endodontic obturation material, includes a syringe portion 12 and a capsule portion 14. The syringe portion 12 and the capsule portion 14 may be removably coupled to each other, which will be described in detail later. Also, although the apparatus 10 will be described in connection with the treatment of root canals, those having ordinary skill in the art will recognize that the present disclosure may equally apply to other types of dental, endodontic or other medical treatment equipment.

In some implementations, the syringe portion 12 and/or the capsule portion 14 can be made from any material, but preferably is made from a non-porous, inert, biocompatible material such as, for example, a plastic polymer. As an example, the syringe portion 12 and/or the capsule portion 14 can be made from an injection molded polymer or a cast polymer. In other implementations, a portion or wholly, the syringe portion 12 and/or the capsule portion 14 can also be constructed of one material and coated with a non-porous, biocompatible material such as, for example, a polymer resin.

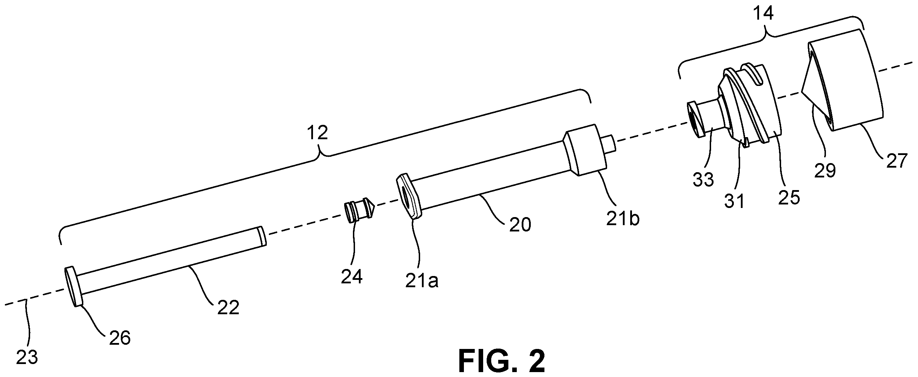

Referring to FIG. 2, the syringe portion 12 may encompass a syringe 20, a plunger 22, and a stopper 24. The syringe 20 is an elongated hollow member configured to contain a first material. As an example, the first material can be an endodontic obturation material. In one implementation, the first material can be in powder form to be mixed with a liquid to form a composition, i.e., paste. In other implementations, the first material can be in liquid form to be mixed with another liquid to form a final product for irrigation products, for example. It should be appreciated that the first material can also be formed as a ready-mixed composition. Some exemplary mixed composition can include, but are not limited to, mineral trioxide aggregate (MTA) power and de-ionized water, hydrogel based power and de-ionized powder, two-part epoxy mixture, such as, resin and activator, or any combination thereof.

As shown in FIG. 2, the syringe 20 includes a first (proximal) open end 21a for receiving a plunger 22 and a second (distal) open end 21b for extruding the composition. That is, the plunger 22 is inserted in the first open end 21a and slidably movable within the syringe 20 to force the composition out of the syringe 20 via the second open end 21b. The first open end 21a and the second open end 21b defines a longitudinal axis 23.

In some implementations, the plunger 22 acts as a drive element or a piston capable of moving within an interior chamber of the syringe 20 to cause the flow of substance therein. Unlike conventional extruders, the plunger 22 requires only a low activation force and provides a better control for extruding the composition. The plunger 22 can create a seal along the sidewalls of the internal chamber of the syringe 20 so that substance is confined to the section of the internal chamber between the plunger 22 and an interface between the syringe portion 12 and the capsule portion 14. At one end thereof, the plunger 22 includes a flat end portion 26 configured to receive a portion of the user's hand, more specifically, a thumb, to activate the plunger 22 and cause movement of the plunger 22 within the syringe 20. In one implementation, the user moves the plunger 22 towards the second distal open end 21b for expelling the material.

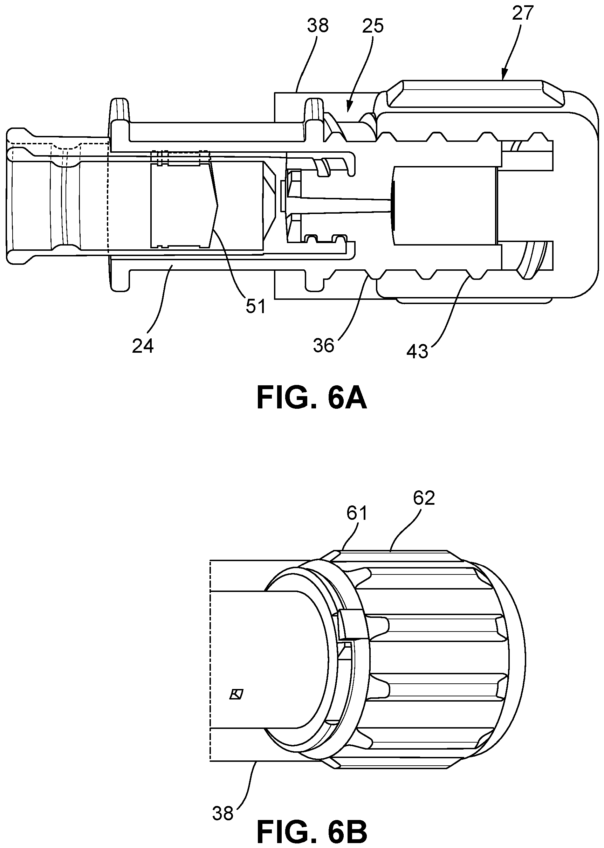

The stopper 24 is positioned between the plunger 22 and the second distal open end 21b. The stopper 24 contains the first material within the syringe 20 and can control any air gap needed to properly mix the formed composition in the syringe 20. In some implementations, the stopper 24 can include a tapered portion 51 (FIG. 6A) to allow for ease in insertion into the syringe 20 and/or ease in movement within the interior chamber of the syringe 20. The stopper 24 is designed to move back and forth within the internal chamber of the syringe 20 caused by the pressure stemming from the first proximal open end 21a or the second distal open end 21b (i.e., plunger 22 or capsule portion 14) while enabling a seal along the sidewalls thereof.

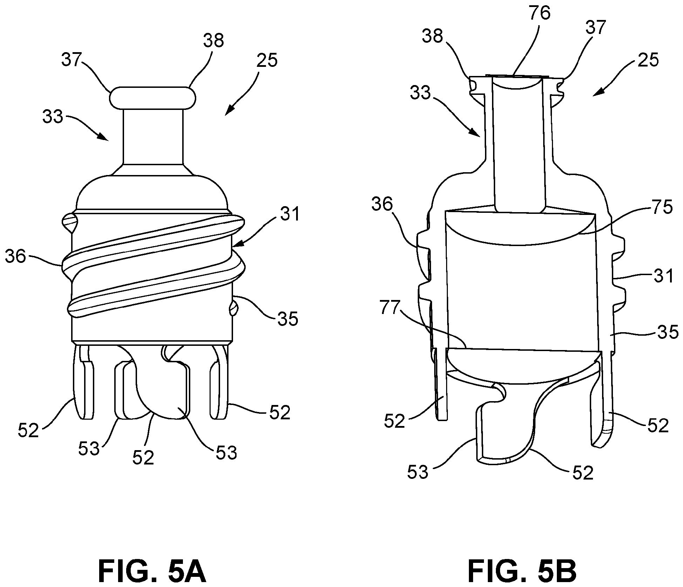

The capsule portion 14 includes a capsule or container 25, a capsule extruder 27, and a capsule stopper 29. The capsule 25 contains the second material for mixing with the first material. As an example, the second material can be related to an endodontic obturation material. In one implementation, the second material is in liquid form to be mixed with the powder in the syringe 20 to form a composition. As shown in FIG. 5A and 5B, the capsule 25 includes a body portion 31 and a neck portion 33 integrally formed as a one-piece member. In other implementations, the body portion 31 and the neck portion 33 can be separately formed and eventually formed together. Each of body portion 31 and neck portion 33 includes a plurality of threads 36 and 38, respectively, formed on the respective outer surfaces. More specifically, threads 36 are formed on an outer surface 35 of body portion 31 and threads 38 are formed on an outer surface 37 of neck portion 33. Threads 38 are configured to engage with a connection portion 41 of the syringe 20, which will be described later in detail. Threads 36 are configured to engage with the capsule extruder 27. More specifically, as shown in FIG. 6A the capsule extruder 27 includes a plurality of (internal) threads 43 that are configured to receive and cooperatively engage (mate) with threads 36 of the capsule 25. Stated differently, threads 36 of the capsule 25 are male threads that cooperatively engage with female threads 43 of the capsule extruder 27, creating a female-male connection. The threaded connection allows torque to be used as mechanical advantage to extrude the second material into the syringe 20, which will be described later in detail. It should be appreciated that other connection means can be employed besides the ones described herein.

Referring back to FIG. 2, the capsule stopper 29 is designed to contain the second material (e.g., liquid) inside of the capsule 25. Accordingly, the capsule 25 is configured to receive the capsule stopper 29 and is positioned between the capsule 25 and the capsule extruder 27. During use of the capsule extruder 27, the capsule stopper 29 is configured to linearly move within the capsule 25. For instance, the capsule stopper 29 is configured to press linearly along the inner diameter of the capsule 25 via a rotational force between an interface of the capsule 25 and the capsule extruder 27. This linear force extrudes (pushes) the second material into the syringe 20 where the two materials are to be mixed.

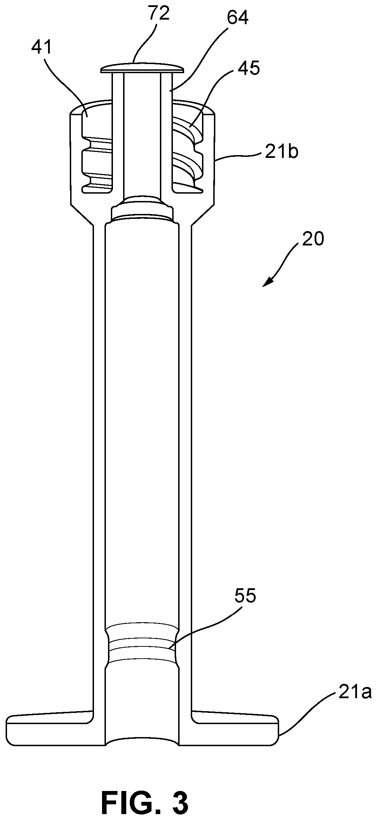

Referring to FIG. 3, the syringe 20 includes a plurality of (inner) threads 45 in the connection portion 41 of the syringe 20. Similarly, threads 45 are configured to receive and cooperatively engage (mate) with threads 38 of the capsule 25. Stated differently, threads 45 of the capsule 25 are male threads that cooperatively engage with female threads 45 of the syringe 20, creating a female-male connection. It should be appreciated that other connection means can be employed besides the ones described herein.

The syringe 20 further includes a syringe stopper retaining feature 55 near the first open end 21a. The syringe stopper retaining feature 55 is configured to retain the syringe stopper 24 within the syringe 20 and keep the first material and the second material from leaking out of the back of the syringe 20. Additionally, the syringe stopper retaining feature 55 is configured to keep the plunger 22 from falling out of the syringe 20 (i.e., retain) when the plunger 22 is assembled.

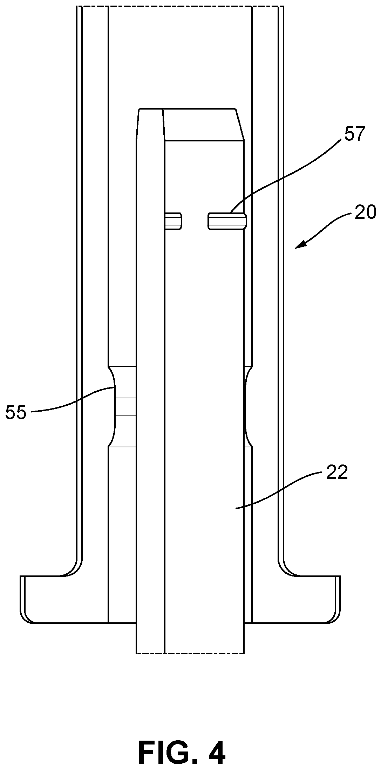

Referring to FIG. 4, in some implementations, the plunger 22 may include a plunger retaining feature 57 which is configured to retain the plunger 22 inside of the syringe 20 after the plunger 22 has been assembled into the syringe 20 by the interference caused by the syringe stopper retaining feature 55 and the plunger retaining feature 57. The plunger retaining feature 57 also allows for air to move past the plunger 22 in order to have coincident contact between the plunger 22 and the syringe stopper 24. This eliminates compressive forces between the plunger 22 and the syringe stopper 24 allowing for the user to have more control over extrusion of the mixed composition. In one implementation, the plunger retaining feature 57 may be positioned near an end of the plunger 22. It is appreciated that the plunger retaining feature 57 can be positioned along other areas of the plunger 22.

Referring back to FIG. 3, the syringe 20 includes a foil barrier 72 attached at the second open end 21b to contain the first material (e.g., powder) therein during storage and transportation. More specifically, the foil barrier 72 is attached to a dispensing end portion 64 of the syringe 20 until in use. Additionally, the foil barrier 72 helps keep and protect the first material from interacting with the ambient environment (e.g., moisture or humidity). In use, the foil barrier 72 is removed by the user before attaching the capsule portion 14 onto the syringe 20. Alternatively, the foil barrier 72 can detach from the syringe 20 when sufficient pressure caused by the either the plunger 20 or the capsule 25 is applied. The foil barrier 72 can be generally metal or foil materials; however, other materials, such as, for example, polymers or other plastic, paper, or other similar packaging materials can be used. The foil barrier 72 may include adhesive or welding features to permit secure attachment of the foil barrier 72 to the syringe 20, e.g., while allowing the foil barrier 72 to be subsequently peeled away or otherwise separated to access the first material within the syringe 20. In some implementations, a second foil barrier (not shown) can be attached at or near the first open end 21a of the syringe 20.

Referring to FIGS. 5A and 5B, similarly, the capsule 25 includes a plurality of foil barriers 75, 76, 77 placed within the capsule 25 to contain the second material (e.g., liquid) therein and keep the second material separate from the first material of the syringe 20. For example, foil barrier 75 is placed in the capsule 25 during the manufacturing process. Foil barrier 25 breaks when increased pressure caused by the capsule extruder 27 interacting with the capsule 25 is achieved. When the foil barrier 75 breaks, the second material will be allowed to flow freely into the syringe 20 when connected. Foil barrier 76 is positioned at the end of the capsule 25 near the open end of the neck portion 33. This location can allow for the capsule 25, the foil barrier 76, the capsule stopper 29, the capsule extruder 27, and the second material (i.e., liquid) to be fully assembled and contained separately from the rest of the components giving a higher barrier to water loss due to evaporation. In use, the user removes the foil barrier 76 from the capsule 25 and then attaches (i.e., rotates) the capsule 25 onto the syringe 20 to allow for the second material to be extruded and mixed into the syringe 20. Foil barrier 77 is positioned at an end portion of the capsule 25 near the opposite end of the open end of the neck portion 33. In use, as the capsule extruder 27 is rotated about the capsule 25, the capsule stopper 29 penetrates the foil barrier 77 and extrudes the second material into the syringe 20. It should be appreciated that the foil barrier 77 can be used in conjunction with the foil barrier 75 and/or the foil barrier 76. In other words, the foil barriers 75, 76, 77 are not mutually exclusive and can be used separately or together. In combination, the foil barriers 75, 76, 77 provide a superior liquid containment capsule. This prevents any of the liquid from escaping while the dispensing assembly 10 is being stored.

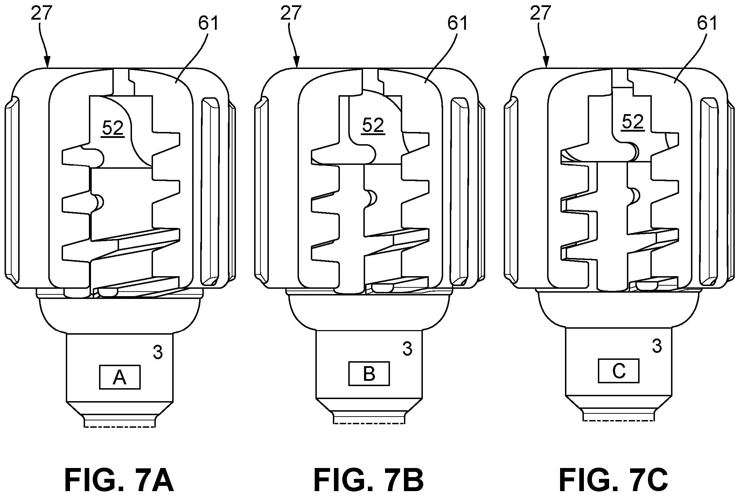

As shown in FIGS. 5A and 5B, in some implementations, at one end (opposite of threads 38) of the capsule 25, a plurality of locking features 52 are attached thereto and configured to mate with the capsule extruder 27. More specifically, the plurality of locking features 52 can interface with mating features 61 (FIGS.7A-7C) of the capsule extruder 27 in order to allow the entire capsule portion 14 (i.e., capsule 25, capsule stopper 29 and capsule extruder 27) to be removed from the syringe 20. In other words, the capsule portion 14 can be detached (i.e., unscrewed) from the syringe 20 as one unit after the mixture of the first and second materials is complete. This enables a quick removal of the entire capsule portion 14 or a quick replacement of another capsule portion without the user interfacing (contacting, touching) with the materials. In one implementation, the locking features 52 are fin-like shaped having an orthogonal extending portion 53 for locking with the mating features 61 of the capsule extruder 27 when rotated. Once the capsule 25 is engaged to the capsule extruder 27, the locking features 52 prevent movement of the capsule 25 in the reverse direction. In addition and/or in conjunction, the locking features 52 can also prevent the reverse movement of the plunger 22 thereby preventing movement of any material from the syringe 20 to the capsule 25. This can also provide a tactile feedback to the user.

FIGS. 7A-7C illustrate an exemplary operation of the locking features 52 with respect to the mating features 61 of the capsule extruder 27. For example, FIG. 7A shows the first interaction between the locking features 52 of the capsule 25 and the capsule extruder 27. At this point, the locking features 52 have started to compress and be guided into the mating features 61 on the capsule extruder 27. FIG. 7B shows the midway point where the locking features 52 are further interfering with the mating features 61 on the capsule extruder 27 while rotated. FIG. 7C shows the fully locked interface where the locking features 52 are no longer allowed to reverse direction and unscrew from the mating features 61 on the capsule extruder 27.

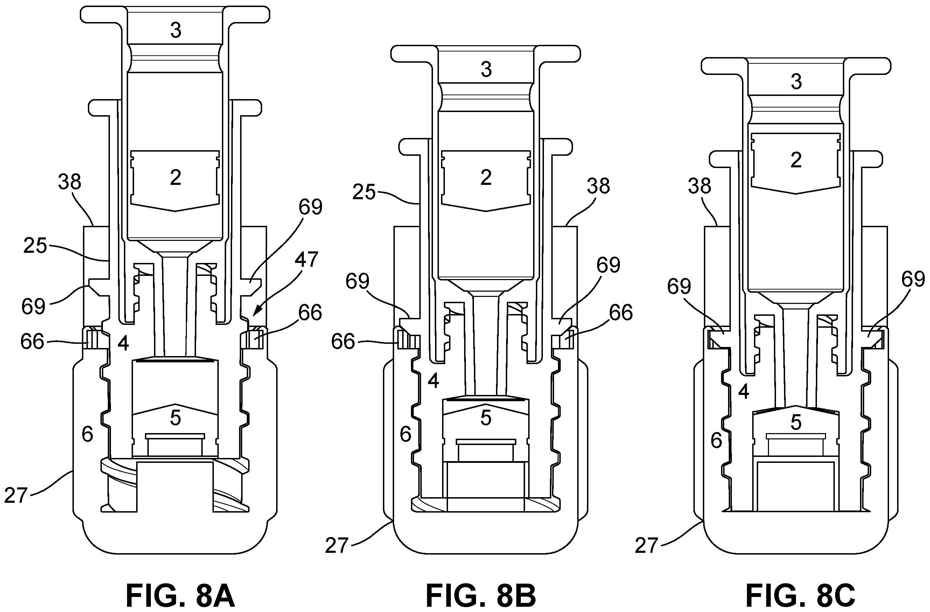

In an alternative embodiment, as shown in FIGS. 8A-8C, the capsule 25 can be configured to engage (i.e., lock) with the capsule extruder 27 at an end 47 of the capsule extruder 27. For example, the capsule extruder 27 may include spring hooks 66 that interface with a lip (or protrusion) 69 on the capsule 25. As the capsule extruder 27 is rotated onto the capsule 25, the spring hooks 66 on the capsule extruder 27 interfere with the lip 69 on the capsule 25 and spring out (FIG. 8B). When the lip 69 on the capsule 25 is exceeded, the spring hooks 66 on the capsule extruder 27 latch over the lip 69 on the capsule 25 (FIG. 8C) and provide a reinforcement lock such that when the capsule 25 and the capsule extruder 27 are removed from the syringe 20, the entire capsule portion 14 can be removed as a single assembly. In some implementations, the capsule extruder 27 can include an extended portion 38 (sleeve) to extend within the capsule 25 and into the syringe 20. This extended portion 38 of the capsule extruder 27 can be used with amalgamator units.

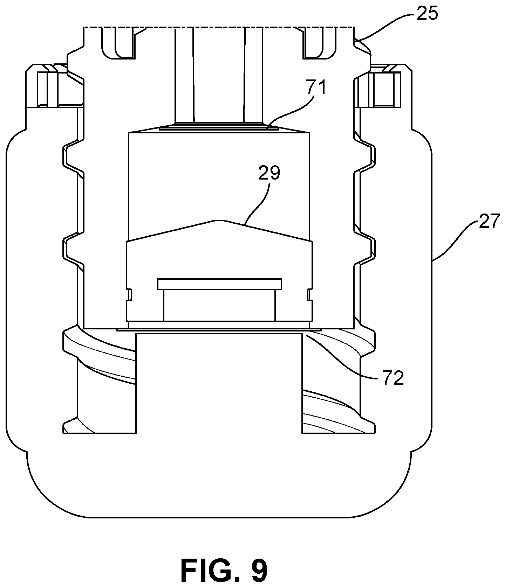

Referring to FIG. 9, in some implementations, the capsule portion 14 may contain foil barriers 71, 72. For example, the capsule stopper 29 can be configured to be contained inside of the capsule 25 by the (inner) foil barrier 71 and the (upper outer) foil barrier 72. In use, the capsule extruder 27 would break or erupt the foil barrier 72 when the capsule extruder 27 rotates towards the capsule 25. Due to the rotation, the pressure created by the capsule stopper 29 in the capsule 25 breaks the foil barrier 71 and allows the second material (i.e., liquid) to move from the capsule 25 to the syringe 20.

In some implementations, the capsule extruder 27 can include a plurality of grippers 62 on an outer surface thereof, as shown in FIG. 6B. The grippers 62 can assist the user for better handling of the capsule extruder 27 including rotational effect of the capsule extruder 27 against the capsule 25. In some implementations, the grippers 62 can be, but are not limited to, serrations, grooves, or bumps formed on the surface of the capsule extruder 27. In some implementations, a locking feature 81 can be located on the capsule extruder 27. The locking feature 81 prevents movement or locks the capsule extruder 27 in place. It should be appreciated that there may be more than one locking feature 81. In some implementations, the capsule extruder 27 can include an extended portion 38 (sleeve) to extend within the capsule 25 and into the syringe 20. This extended portion 38 of the capsule extruder 27 can be used with amalgamator units.

In some implementations, the capsule extruder 27 can include markings (not shown) on the capsule extruder 27 and/or the capsule 25 to determine that the second material has been completely extruded into the syringe. In other implementations, a tactile feedback device provided between the capsule extruder 27 and the capsule 25 can be included to aid in alerting the user that the volume of the second material has been completely extruded into the syringe.

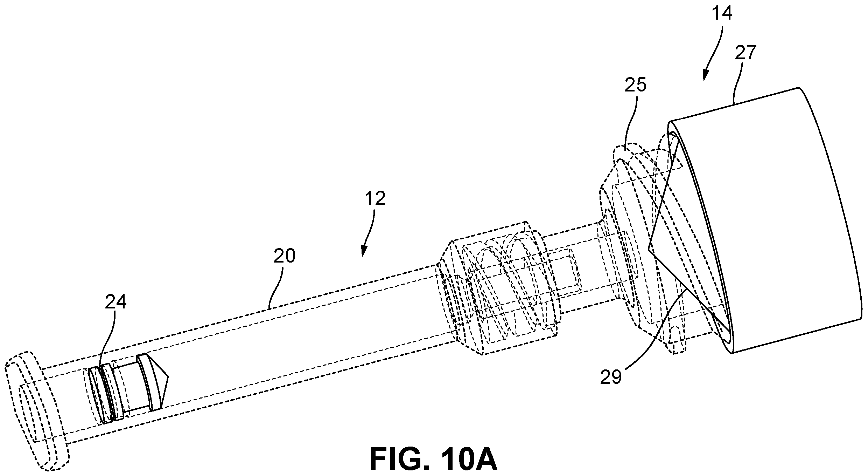

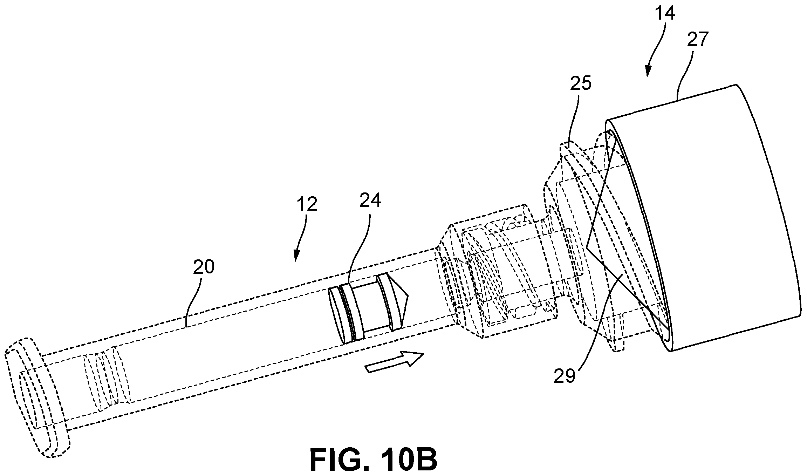

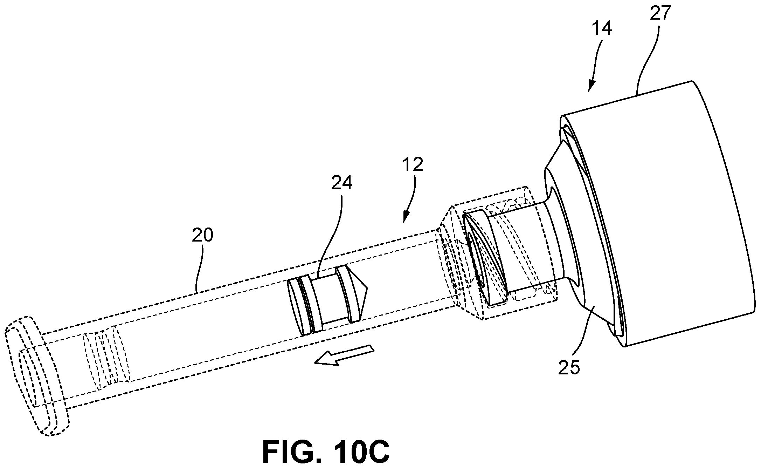

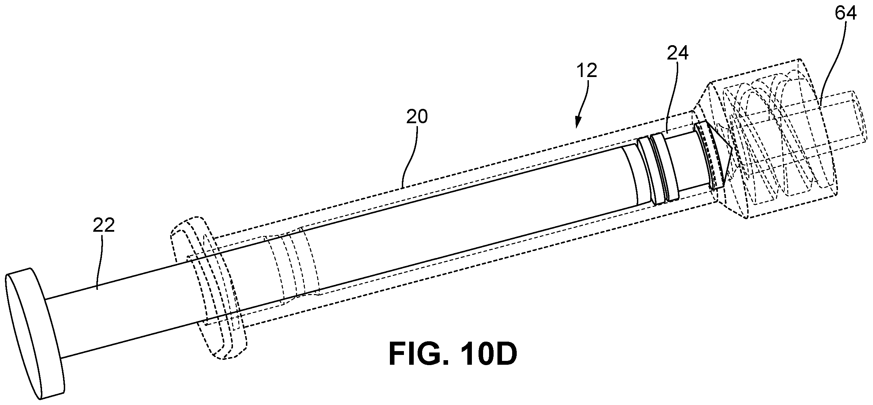

Referring to FIGS. 10A-10D, in use, the capsule portion 14 is configured to engage with the syringe portion 12 and mix the first and second materials together to extrude the mixed composition from the syringe 20. More specifically, the capsule 27, containing the second material (e.g., liquid), is configured to engage the syringe 20 containing the first material (e.g., powder). Once connected, the second material contained in the capsule 27 mixes with the first material in the syringe 20. In one implementation, the capsule extruder 27 is rotated (e.g., ¾ turn) causing the capsule stopper 29 positioned in the capsule 25 to advance towards the syringe 20 and push the second material into the syringe 20. In some implementations, the pressure caused by the movement of the capsule stopper 29 in the capsule 25 may cause one or more foil barriers (e.g., 75, 79 or 77) to break and release the second material inside of the capsule 25. Further, the pressure of the capsule stopper 29 of the capsule 25 may also push the syringe stopper 24 to move away from the capsule 25, as shown in FIG. 10C. In other words, the syringe stopper 24 is moved in a first direction (i.e., towards the capsule portion 14) when the first material in the syringe 20 is ready to be mixed, and the syringe stopper 24 is moved in a second direction (i.e., away from capsule portion 14), opposite the first direction, when the second material in the capsule 25 commences mixing. The movement of the syringe stopper 24 allows sufficient space within the syringe 20 for mixing the first and second materials together. Then the entire dispending assembly including the capsule 27 and the syringe 20 is loaded into a mixer (not shown) and mixed for a pre-determined period. In one implementation, the capsule 27 and the syringe 20 are mixed for less than 12 seconds. Once mixed, the entire capsule portion 14 (including the capsule 25, capsule extruder 27 and the capsule stopper 29) can be removed from the syringe 20 and the plunger 22 is inserted into the syringe 20 at the first open end 21a for administering the mixed composition (FIG. 10D). As such, the present device allows for a quick and efficient procedure for mixing the materials while administering the mixed composition with low force. Additionally, the present device provides a quick- change instrument to rapidly and efficiently replace the capsule with another capsule. Moreover, the present device allows for different connectors (e.g., luer locks) to be connected at the tip 64 of the syringe 20 for different application force and/or volume.

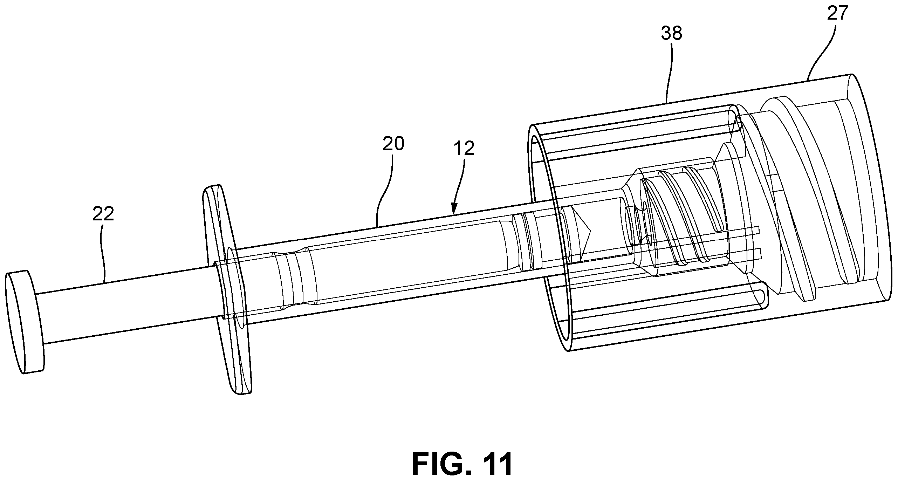

Referring to FIG. 11, in some implementations, the plunger 22 can be attached to the syringe 20 as a single assembly. Further, as shown in FIG. 11, the capsule extruder 27 can be larger to cover the entire capsule 25. In other words, the capsule extruder 27 includes an extended portion 38 (sleeve) to extend beyond the capsule 25 and into the syringe portion 12, in particularly, the syringe 20. This extended portion 38 of the capsule extruder 27 can be used with amalgamator units.

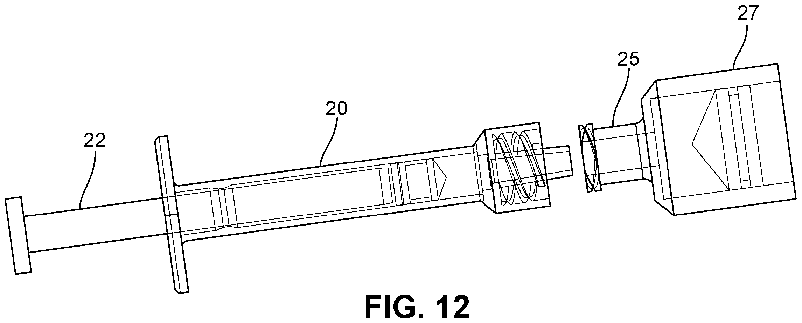

Referring to FIG. 12, in some implementations, instead of threads as connection means, the capsule 25 can be connected to the syringe 20 by a non-twist container that uses suction from the plunger 22 to pull the second material in the capsule 25 into the syringe 20.

In some implementations, the dispensing assembly disclosed herein is of particular use with dental materials where precision mixture of substances is critical to a successful medical procedure. As such, the device may have utility with the delivery of restorative dental products such as dual-cure or self-cure resins for impression taking, bleaching materials, various crown and bridge materials, cements, endodontic materials for treating root canals, dental restoratives, application of anesthetics, periodontal materials and dental lab products. In addition, the device itself may have utility with pharmaceutical or medical products that also require precision mixture of substances.

The articles "a" and "an," as used herein, mean one or more when applied to any feature in embodiments of the present disclosure described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity.

"At least one," as used herein, means one or more and thus includes individual components as well as mixtures/combinations.

The transitional terms "comprising", "consisting essentially of' and "consisting of', when used in the appended claims, in original and amended form, define the claim scope with respect to what unrecited additional claim elements or steps, if any, are excluded from the scope of the claim(s). The term "comprising" is intended to be inclusive or open-ended and does not exclude any additional, unrecited element, method, step or material. The term "consisting of' excludes any element, step or material other than those specified in the claim and, in the latter instance, impurities ordinarily associated with the specified material(s). The term "consisting essentially of" limits the scope of a claim to the specified elements, steps or material(s) and those that do not materially affect the basic and novel characteristic(s) of the claimed disclosure. All materials and methods described herein that embody the present disclosure can, in alternate embodiments, be more specifically defined by any of the transitional terms "comprising," "consisting essentially of," and "consisting of."

Although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that, if an element is referred to as being "connected" or "coupled" to another element, it can be directly connected, or coupled, to the other element or intervening elements may be present. In contrast, if an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

Spatially relative terms (e.g., "beneath," "below," "lower," "above," "upper" and the like) may be used herein for ease of description to describe one element or a relationship between a feature and another element or feature as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, for example, the term "below" can encompass both an orientation that is above, as well as, below. The device may be otherwise oriented (rotated 90 degrees or viewed or referenced at other orientations) and the spatially relative descriptors used herein should be interpreted accordingly.

Example embodiments are described herein with reference to cross-sectional illustrations that are schematic illustrations of idealized embodiments (and intermediate structures). As such, variations from the shapes of the illustrations as a result, for example, of manufacturing techniques and/or tolerances, may be expected. Thus, example embodiments should not be construed as limited to the particular shapes of regions illustrated herein but may include deviations in shapes that result, for example, from manufacturing.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

While the disclosure has been described with reference to a preferred embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A dispenser assembly, comprising:
a syringe portion including:
a syringe containing a first material, the syringe includes a proximal open end and a distal open end defining a lumen; and
a plunger disposed within the lumen at the proximal open end, the plunger configured to slidably move within the lumen and push the first material towards the distal open end; and
a capsule portion interfacing with the syringe portion, including:
a capsule containing a second material;
a capsule stopper disposed within the capsule; and
an extruder configured to engage with the capsule and extrude the second material out of the capsule,
wherein a rotation force of the extruder causes the capsule stopper to slidably move and push the second material towards the syringe portion for mixing the first material and second material together within the syringe.

2. The dispenser assembly of claim 1, wherein the extruder includes a plurality of internal threads that correspondingly mate with a plurality of external threads on the capsule.

3. The dispenser assembly of claim 1, wherein the extruder includes a locking feature at one end thereof to lock the extruder and the capsule together while extruding the second material.

4. The dispenser assembly of claim 3, wherein the locking feature allows the extruder and the capsule to be removed from the syringe as a single assembly.

5. The dispenser assembly of claim 3, wherein the locking feature engages with a retaining feature on the extruder to lock the capsule and extruder together.

6. The dispenser assembly of claim 3, wherein the locking feature engages with a lip feature on the capsule to lock the extruder and the capsule together, the lip feature extends outwardly from a surface of the capsule.

7. The dispenser assembly of claim 1, wherein the extruder includes at least one gripper portion on an exterior surface of the extruder.

8. The dispenser assembly of claim 1, wherein the capsule includes a body portion and a neck portion integrally formed with the body portion.

9. The dispenser assembly of claim 8, wherein the neck portion includes a plurality of external threads that correspondingly mate with a plurality of internal threads at the distal open end of the syringe.

10. The dispenser assembly of claim 8, wherein the capsule includes at least one seal foil to contain the second material within the capsule.

11. The dispenser assembly of claim 8, wherein the at least one seal foil is located in the body portion.

12. The dispenser assembly of claim 8, wherein the at least one seal foil is located in the neck portion.

13. The dispenser assembly of claim 1, wherein the syringe includes at least one seal foil to contain the first material within the syringe.

14. The dispenser assembly of claim 13, wherein the at least one seal foil is located at the distal open end of the syringe.

15. The dispenser assembly of claim 13, wherein the at least one seal foil is located at the proximal open end of the syringe.

16. The dispenser assembly of claim 1, wherein the syringe includes a retaining feature to retain a syringe stopper within the syringe and maintain the first material within the syringe.

17. The dispenser assembly of claim 1, wherein the plunger includes a retaining feature to retain the plunger within the syringe and allow air to move past the plunger during extrusion.

18. The dispenser assembly of claim 1, wherein the first material is at least one of powder, liquid or solid.

19. The dispenser assembly of claim 1, wherein the second material is at least one of powder, liquid or solid.
